# EUROPEAN PATENT APPLICATION

(11) **EP 4 506 907 A1**
(43) Date of publication of application: **12.02.2025**
(21) Application number: 24188706.6
(22) Date of filing: 15.07.2024
(51) Int. Cl.: G06V 20/13

(54) **SPACE ENVIRONMENT CHARACTERIZATION**

(30) Priority: 11.08.2023 US 202318448818
(71) Applicant: Maxar Intelligence Inc., Westminster, Colorado 80234 (US)
(72) Inventor: TILTON, Barry C., Westminster, 80234 (US); MCKUNE, John F. Jr., Westminster, 80234 (US); NEWBURY, Amy, Westminster, 80234 (US); WHITMIRE, W. Ryder, Westminster, 80234 (US); PARRY, Paul G., Westminster, 80234 (US); HALICK, Michael J., Westminster, 80234 (US); HENKE, Lisa A., Westminster, 80234 (US)
(74) Representative: Zacco Sweden AB

(57) **Abstract**

Space environment characterization may be provided. First, an area of sky may be selected. Then an image of the area of sky may be captured. Next, a plurality of image objects in the image may be identified. A plurality of uncharacterized objects within the plurality of image objects may then be identified.

## Description

### TECHNICAL FIELD

The present disclosure relates generally to space environment characterization.

### BACKGROUND

Space debris may comprise space junk, space pollution, space waste, space trash, space garbage, or cosmic debris. Notwithstanding, space debris may comprise defunct human made objects in space that may be in Earth orbit that may no longer serve a useful function. Space debris may include derelict spacecraft, nonfunctional spacecraft, and abandoned launch vehicle stages including mission-related debris, and numerous in Earth orbit, fragmentation debris from the breakup of derelict rocket bodies and spacecraft. In addition to derelict human made objects left in orbit, other examples of space debris may include fragments from their disintegration, erosion and collisions or even paint flecks, solidified liquids expelled from spacecraft, and unburned particles from solid rocket motors. Space debris may represent a risk to spacecraft for example.

### BRIEF DESCRIPTION OF THE FIGURES

The accompanying drawings, which are incorporated in and constitute a part of this disclosure, illustrate various embodiments of the present disclosure. In the drawings:
FIG. 1 is a block diagram of an operating environment for providing space environment characterization;
FIG. 2 is a flow chart of a method for providing space environment characterization; and
FIG. 3 is a block diagram of a computing device.

### DETAILED DESCRIPTION

### OVERVIEW

Space environment characterization may be provided. First, an area of sky may be selected. Then an image of the area of sky may be captured. Next, a plurality of image objects in the image may be identified. A plurality of uncharacterized objects within the plurality of image objects may then be identified.

Both the foregoing overview and the following example embodiments are examples and explanatory only and should not be considered to restrict the disclosure's scope, as described and claimed. Furthermore, features and/or variations may be provided in addition to those described. For example, embodiments of the disclosure may be directed to various feature combinations and sub-combinations described in the example embodiments.

### EXAMPLE EMBODIMENTS

The following detailed description refers to the accompanying drawings. Wherever possible, the same reference numbers are used in the drawings and the following description to refer to the same or similar elements. While embodiments of the disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the disclosure. Instead, the proper scope of the disclosure is defined by the appended claims.

The need to identify and characterize objects in the space near Earth (including cis-Lunar space) has increased due to the dual factors of additional satellite constellations going on orbit and the results of intentional and accidental collisions in orbit adding exponentially to the debris present. Conventional processes of establishing the debris environment in space involve tracking objects from the ground either by radar or during terminator illumination by optical telescope. Enterprises (e.g., governments) have become concerned by the increased space object count deriving from both the proliferation of new swarm satellite constellations and the residuals from accidental and intentional collisions in space. Accordingly, embodiments of the disclosure may use space optics in a process of detecting smaller debris objects that may not be detectable by conventional processes.

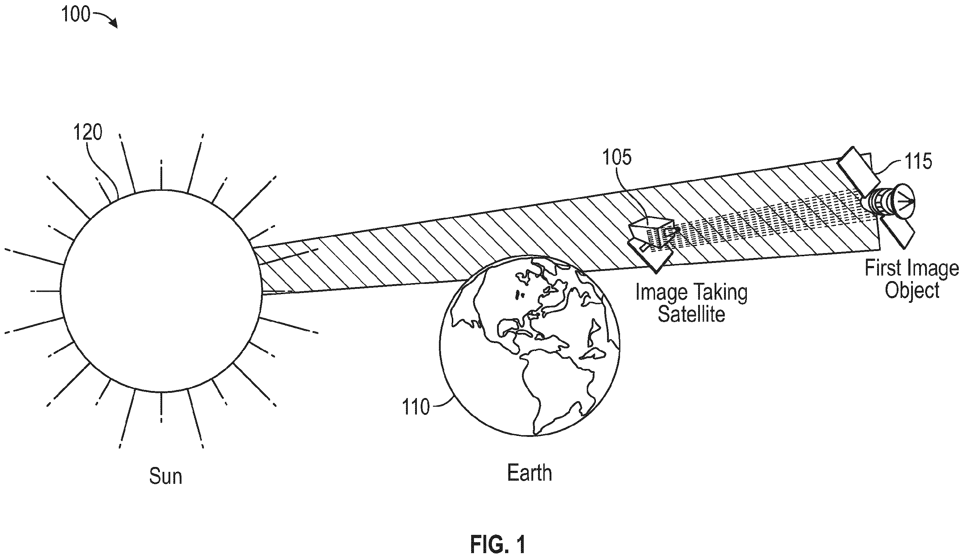

FIG. 1 shows an operating environment 100 for providing space environment characterization. As shown in FIG. 1, operating environment 100 may comprise a image taking satellite 105. Image taking satellite 105 may comprise, but is not limited to, a commercial Earth observation and imaging satellite used or designed for Earth Observation (EO) from orbit, including environmental monitoring, meteorology, cartography, and others. Image taking satellite 105 may collect images in panchromatic and multispectral bands for example. The orbiting altitude of image taking satellite 105 may comprise, but is not limited to, 617 km.

An area of sky around Earth 110 may be selected. An image of the selected area of sky may then be captured by image taking satellite 105. The captured image may comprise a plurality of image objects including, for example, a first image object 115 (e.g., a target satellite). As shown in FIG. 1, the area of sky around Earth 110 may be selected in such a way that Sun 120 may provide some illumination of some of the plurality of image objects in the captured image. The plurality of image objects in the image may then be identified. Then a plurality of uncharacterized objects may be identified within the plurality of image objects. The number of uncharacterized objects may indicate a density of space debris in a given area of space.

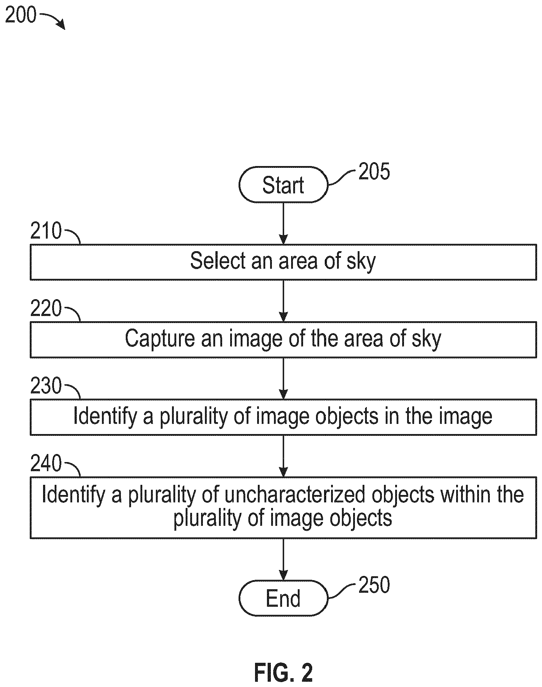

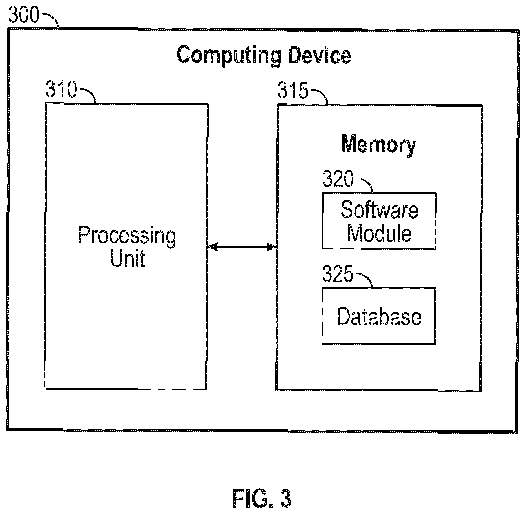

FIG. 2 is a flow chart setting forth the general stages involved in a method 200 consistent with embodiments of the disclosure for providing space environment characterization. Method 200 may be implemented using image taking satellite 105 and a computing device 300 as described in more detail below with respect to FIG. 3. Computing device 300, for example, may be deployed in image taking satellite 105 and may be used to control image taking satellite 105. Computing device 300, however, may be deployed anywhere and image data associated with the captured image of the area of sky may be transmitted from image taking satellite 105 to a network, for example, and then sent to computing device 300. Ways to implement the stages of method 200 will be described in greater detail below.

Method 200 may begin at starting block 205 and proceed to stage 210 where computing device 300 may select an area of sky. For example, it may be desired to discover the amount of debris that is orbiting the Earth. Debris in the space near Earth (including cis-Lunar space) has increased due to the dual factors of additional satellite constellations going on orbit and the results of intentional and accidental collisions in orbit adding exponentially to the debris present. In order to characterize the space environment around the Earth, an area of sky may be selected to obtain an image. The selected area of sky may comprise, but is not limited to, at least a 1% field of view. A single scan performed by the system may cover an area by addressing at least 1 degree of arc in both the up/down and left/right directions. This may allow sufficient area to get a count of objects that may later be correlated with other similar looks in other parts of earth orbit. Larger areas may be used, but the 1 degree x 1 degree geometry may allow for characterization of the overall environment over time.

From stage 210, where computing device 300 selects the area of sky, method 200 may advance to stage 220 where image taking satellite 105 (e.g., under the control of computing device 300) may capture an image of the area of sky. For example, as shown in FIG. 1, the area of sky around Earth 110 may be selected in such a way that Sun 120 may provide some illumination of some of the plurality of image objects in the captured image.

Once image taking satellite 105 (e.g., under the control of computing device 300) captures the image of the area of sky in stage 220, method 200 may continue to stage 230 where computing device 300 may identify a plurality of image objects in the image. For example, the image may include objects. To be considered an object included in the plurality of image objects, the included object may comprise at least a predetermined number of pixels (e.g., greater than 4) having a least a predetermined brightness. At least a portion of the plurality of image objects may comprise, for example, Near Earth Objects (NEOs), objects in Low Earth Orbit (LEO), objects in cis-Lunar space, and objects in geostationary orbit around the earth.

After computing device 300 identifies the plurality of image objects in the image in stage 230, method 200 may proceed to stage 240 where computing device 300 may identify a plurality of uncharacterized objects within the plurality of image objects. For example, the plurality of image objects in the image may comprise both characterized objects and uncharacterized objects. In order to identifying the plurality of uncharacterized objects within the plurality of image objects, a plurality of characterized objects within the plurality of image objects may be determined. Then objects not determined to be the plurality of characterized objects may be determined to be uncharacterized objects within the plurality of image objects. The number of uncharacterized objects may indicate a density of space debris in a given area of space.

At least a portion of the characterized objects may be stars or other naturally occurring astronomical objects. Consistent with embodiments of the disclosure, a star ephemeris may be used to determine that at least a portion of the characterized objects may be stars. A star ephemeris may comprise a database or tables that may provide the trajectory of naturally occurring astronomical objects in the sky that may provide position and possibly velocity over time. Furthermore, at least a portion of the characterized objects may be known satellites. Consistent with embodiments of the disclosure, a known satellite ephemeris may be used to determine that at least a portion of the characterized objects may be known satellites. A known satellite ephemeris may comprise a database or tables that may provide the trajectory of known satellites in the sky that may provide position and possibly velocity over time.

As stated above, objects not determined to be the plurality of characterized objects may be determined to be uncharacterized objects within the plurality of image objects. For example, at least a portion of the uncharacterized objects comprise natural debris. Natural debris may comprise, but is not limited to, destroyed satellites, spent fuel tanks, defunct human made objects, derelict spacecraft, nonfunctional spacecraft, abandoned launch vehicle stages including mission-related debris, fragmentation debris from a breakup of derelict rocket bodies and spacecraft, fragments from their disintegration, erosion, paint flecks, solidified liquids expelled from spacecraft, and unburned particles from solid rocket motors. In addition, at least a portion of the uncharacterized objects comprise maneuvering objects. Maneuvering objects may comprise, but are not limited to, a constellation of low Earth orbit satellites. These low Earth orbit satellites may provide, for example, broadband internet capable of supporting streaming, online gaming, video calls, etc. These low Earth orbit satellites may provide other functions and may not be limited to providing broadband internet.

Consistent with embodiments of the disclosure, the uncharacterized objects may comprise objects of less than 10 cm (e.g., between 10 cm and 1 cm). Embodiments of the disclosure may be able to detect objects of this size range due to, for example, capturing the image of the area of sky when the area of sky is illuminated by the Sun. Embodiments of the disclosure may be able to detect objects of this size range due to, for example, image taking satellite 105 being in orbit thus being able to capture the image of the area of sky through less and thinner atmosphere than an image taken from the Earth's surface. Furthermore, embodiments of the disclosure may determine a size of at least one of the uncharacterized objects based on a brightness of the at least one of the uncharacterized objects. Once computing device 300 identifies the plurality of uncharacterized objects within the plurality of image objects in stage 240, method 200 may then end at stage 250.

FIG. 3 shows computing device 300. As shown in FIG. 3, computing device 300 may include a processing unit 310 and a memory unit 315. Memory unit 315 may include a software module 320 and a database 325. While executing on processing unit 310, software module 320 may perform, for example, processes for providing space environment characterization as described above with respect to FIG. 2. Computing device 300, for example, may be deployed in satellite 105. Notwithstanding, computing device 300 may be deployed anywhere and image data associated with the captured image of the area of sky may be transmitted from satellite 105 to a network, for example, and then sent to computing device 300.

Computing device 300 may be implemented using a Wi-Fi access point, a tablet device, a mobile device, a smart phone, a telephone, a remote control device, a personal computer, a network computer, a mainframe, a router, a switch, a server cluster, a smart TV-like device, a network storage device, a network relay device, or other similar microcomputer-based device. Computing device 300 may comprise any computer operating environment, such as hand-held devices, multiprocessor systems, microprocessor-based or programmable sender electronic devices, minicomputers, mainframe computers, and the like. Computing device 300 may also be practiced in distributed computing environments where tasks are performed by remote processing devices. The aforementioned systems and devices are examples and computing device 300 may comprise other systems or devices.

Embodiments of the disclosure may provide a method comprising: selecting an area of sky; capturing an image of the area of sky; identifying a plurality of image objects in the image; and identifying a plurality of uncharacterized objects within the plurality of image objects. Selecting the area of sky may comprise selecting the area of sky comprising at least a 1 % field of view. Capturing the image of the area of sky may comprise capturing the image of the area of sky when the area of sky is illuminated by the Sun.

Identifying the plurality of uncharacterized objects within the plurality of image objects may comprise: determining a plurality of characterized objects within the plurality of image objects; and determining objects not determined to be the plurality of characterized objects to be uncharacterized objects within the plurality of image objects. Determining the plurality of characterized objects within the plurality of image objects may comprise determining at least a portion of the characterized objects to be stars. Determining the at least a portion of the characterized objects to be stars may comprise using a star ephemeris. Determining the plurality of characterized objects within the plurality of image objects may comprise determining at least a portion of the characterized objects to be known satellites. Determining the at least a portion of the characterized objects to be known satellites may comprise using a known satellite ephemeris. At least a portion of the uncharacterized objects may comprise natural debris. At least a portion of the uncharacterized objects may comprise maneuvering objects. At least one of the uncharacterized objects may comprise an object of less than 10 cm. At least one of the uncharacterized objects may comprise an object of less than 10 cm and greater than 1 cm.

Embodiments of the disclosure may further comprise determining a size of at least one of the uncharacterized objects based on a brightness of the at least one of the uncharacterized objects. At least a portion of the plurality of image objects may comprise Near Earth Objects (NEOs). At least a portion of the plurality of image objects may comprise objects in Low Earth Orbit (LEO). At least a portion of the plurality of image objects may comprise objects in cis-Lunar space. At least a portion of the plurality of image objects may comprise objects in geostationary orbit around the earth.

Embodiments of the disclosure, for example, may be implemented as a computer process (method), a computing system, or as an article of manufacture, such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process. Accordingly, the present disclosure may be embodied in hardware and/or in software (including firmware, resident software, micro-code, etc.). In other words, embodiments of the present disclosure may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

While certain embodiments of the disclosure have been described, other embodiments may exist. Furthermore, although embodiments of the present disclosure have been described as being associated with data stored in memory and other storage mediums, data can also be stored on or read from other types of computer-readable media, such as secondary storage devices, like hard disks, floppy disks, or a CD-ROM, a carrier wave from the Internet, or other forms of RAM or ROM. Further, the disclosed methods' stages may be modified in any manner, including by reordering stages and/or inserting or deleting stages, without departing from the disclosure.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. Embodiments of the disclosure may also be practiced using other technologies capable of performing logical operations such as, for example, AND, OR, and NOT, including but not limited to, mechanical, optical, fluidic, and quantum technologies. In addition, embodiments of the disclosure may be practiced within a general purpose computer or in any other circuits or systems.

Embodiments of the disclosure may be practiced via a system-on-a-chip (SOC) where each or many of the element illustrated in FIG. 2 may be integrated onto a single integrated circuit. Such an SOC device may include one or more processing units, graphics units, communications units, system virtualization units and various application functionality all of which may be integrated (or "burned") onto the chip substrate as a single integrated circuit. When operating via an SOC, the functionality described herein with respect to embodiments of the disclosure, may be performed via application-specific logic integrated with other components of computing device 300 on the single integrated circuit (chip).

Embodiments of the present disclosure, for example, are described above with reference to block diagrams and/or operational illustrations of methods, systems, and computer program products according to embodiments of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

While the specification includes examples, the disclosure's scope is indicated by the following claims. Furthermore, while the specification has been described in language specific to structural features and/or methodological acts, the claims are not limited to the features or acts described above. Rather, the specific features and acts described above are disclosed as example for embodiments of the disclosure.

## Claims

1. A method comprising:
selecting an area of sky;
capturing an image of the area of sky;
identifying a plurality of image objects in the image; and
identifying a plurality of uncharacterized objects within the plurality of image objects.

2. The method of claim 1, wherein selecting the area of sky comprises selecting the area of sky comprising at least a 1% field of view.

3. The method of any of the preceding claims, wherein capturing the image of the area of sky comprises capturing the image of the area of sky when the area of sky is illuminated by Sun.

4. The method of any of the preceding claims, wherein identifying the plurality of uncharacterized objects within the plurality of image objects comprises:
determining a plurality of characterized objects within the plurality of image objects; and
determining objects not determined to be the plurality of characterized objects to be uncharacterized objects within the plurality of image objects.

5. The method of claim 4, wherein determining the plurality of characterized objects within the plurality of image objects comprises determining at least a porting of the characterized objects to be stars,
wherein optionally determining the at least a portion of the characterized objects to be stars comprising using a star ephemeris.

6. The method of claim 4, wherein determining the plurality of characterized objects within the plurality of image objects comprises determining at least a portion of the characterized objects to be known satellites,
wherein optionally determining the at least a portion of the characterized objects to be known satellites comprising using a known satellite ephemeris.

7. The method of claim 4, wherein at least a portion of the uncharacterized objects comprise natural debris.

8. The method of claim 4, wherein at least a portion of the uncharacterized objects comprise maneuvering objects.

9. The method of claim 4, wherein at least one of the uncharacterized objects comprise an object of less than 10 cm.

10. The method of claim 4, wherein at least one of the uncharacterized objects comprise an object of less than 10 cm and greater than 1 cm.

11. The method of any of the preceding claims, further comprising determining a size of at least one of the uncharacterized objects based on a brightness of the at least one of the uncharacterized objects.

12. The method of any of the preceding claims, wherein at least a portion of the plurality of image objects comprise Near Earth Objects (NEOs) and/or
wherein at least a portion of the plurality of image objects comprise objects in Low Earth Orbit (LEO) and/or
wherein at least a portion of the plurality of image objects comprise objects in cis-Lunar space and/or
wherein at least a portion of the plurality of image objects comprise objects in geostationary orbit around Earth.

13. A system comprising:
a memory storage; and
a processing unit coupled to the memory storage, wherein the processing unit is operative to:
identify a plurality of image objects in an image of sky; and
identifying a plurality of uncharacterized objects within the plurality of image objects wherein the processing unit being operative to identify the plurality of uncharacterized objects within the plurality of image objects comprises the processing unit being operative to:
determine a plurality of characterized objects within the plurality of image objects; and
determine objects not determined to be the plurality of characterized objects to be uncharacterized objects within the plurality of image objects.

14. The system of claim 13, wherein the processing unit being operative to determine the plurality of characterized objects within the plurality of image objects comprises the processing unit being operative to determine the characterized objects to be stars and known satellites.

15. A non-transitory computer-readable medium that stores a set of instructions which when executed perform a method executed by the set of instructions comprising:
selecting an area of sky;
capturing an image of the area of sky;
identifying a plurality of image objects in the image; and
identifying a plurality of uncharacterized objects within the plurality of image objects.
